# EUROPÄISCHE PATENTSCHRIFT

(11) **EP 3 234 377 B1**
(45) Veröffentlichungstag und Bekanntmachung des Hinweises auf die Patenterteilung: **18.08.2021**
(21) Anmeldenummer: 15785150.2
(22) Anmeldetag: 28.10.2015
(51) Int. Cl.: F15B 21/04, F01D 17/18

(54) **STELLANTRIEB FÜR EIN REGELVENTIL, INSBESONDERE DAMPFTURBINENREGELVENTIL UND VERFAHREN ZUM BETREIBEN DESSELBEN**
ACTUATING DRIVE FOR A CONTROL VALVE, IN PARTICULAR STEAM TURBINE CONTROL VALVE AND METHOD FOR OPERATING SAME
MÉCANISME DE COMMANDE POUR UNE SOUPAPE DE RÉGLAGE, EN PARTICULIER UNE SOUPAPE DE RÉGLAGE D'UNE TURBINE À VAPEUR, ET SON PROCÉDÉ DE FONCTIONNEMENT

(30) Priorität: 19.12.2014 DE 102014226672
(43) Veröffentlichungstag der Anmeldung: 25.10.2017
(73) Patentinhaber: Voith Patent GmbH, 89522 Heidenheim (DE)
(72) Erfinder: SCHABER, Hubert, 71277 Rutesheim (DE)
(74) Vertreter: Voith Patent GmbH - Patentabteilung
(86) Internationale Anmeldenummer: PCT/EP2015/074963
(87) Internationale Veröffentlichungsnummer: WO 2016/096222

(56) Entgegenhaltungen:
- EP-A1- 0 127 027
- EP-A1- 2 620 655
- WO-A1-2014/176252
- JP-A- H06 313 410
- US-A1- 2010 006 165

## Beschreibung

Die vorliegende Erfindung betrifft einen Stellantrieb für ein Regelventil, insbesondere für ein Dampfturbinenregelventil, gemäß dem Oberbegriff von Anspruch 1 sowie ein Verfahren zum Betreiben desselben.

In Dampfkraftwerken wird der mittels eines Dampferzeugers erzeugte Dampf über wenigstens ein, in der Regel zwei bis vier Dampfturbinenregelventile der Dampfturbine zugeführt, in welcher er unter Erzeugung mechanischer Arbeit expandiert wird und anschließend einem Kondensator zur Kondensation zugeführt wird. Die Dampfturbinenregelventile sind in parallelen Dampfzuleitungen der Dampfturbine positioniert, um die gewaltigen Dampfvolumenströme auf die verschiedenen Dampfturbinenregelventile verteilen zu können. Trotz der Aufteilung sind die Dampfvolumenströme pro Ventil immer noch so groß, dass die Ventile in der Regel mehrere Tonnen wiegen und entsprechend der Ventilkörper ein hohes Gewicht aufweist, das von einem entsprechend starken Stellantrieb bewegt werden muss.

Zum Antrieb der Regelventile werden daher in der Regel vorwiegend hydraulische oder gegebenenfalls auch pneumatische Stellantriebe verwendet, die einen Arbeitszylinder mit einer an einem Kolben angeschlossenen Kolbenstange als Aktuator für den Ventilkörper des jeweiligen Regelventils aufweisen, um durch Einfahren der Kolbenstange in den und Ausfahren der Kolbenstange aus dem Arbeitszylinder den Ventilkörper zu betätigen, damit dieser, beispielweise in dem genannten Dampfkraftwerk, den Strömungsquerschnitt des Dampfturbinenregelventils mehr oder minder verschließt.

Zur Verschiebung des Kolbens mit der Kolbenstange in dem Arbeitszylinder begrenzt der Kolben wenigstens einen Druckraum, in den ein druckbeaufschlagtes Arbeitsmedium, entweder ein hydraulisches Arbeitsmedium, beispielweise Öl, oder ein pneumatisches Arbeitsmedium, beispielsweise Luft, eingeleitet werden kann, um den Kolben entgegen der Kraft einer Feder zu verschieben. Der Druck des Arbeitsmediums wird über eine Arbeitsmediumpumpe im externen Arbeitsmediumkreislauf aufgebaut, an welchen der Arbeitszylinder mit wenigstens einem entsprechenden Druckanschluss des Druckraumes angeschlossen ist. Da der externe Arbeitsmediumkreislauf, wie bei einer Ausführungsform der vorliegenden Erfindung, in der Regel als geschlossener Kreislauf ausgeführt ist, weist dieser in der Regel neben einer Druckleitung, über welche das druckbeaufschlagte Arbeitsmedium aus der Arbeitsmediumpumpe in den ersten Druckraum eingeleitet wird, auch eine Tankleitung auf, die Arbeitsmedium über einen zweiten Druckanschluss eines zweiten Druckraumes aus dem zweiten Druckraum, der auf der dem ersten Druckraum abgewandten Seite des Kolbens positioniert und über den Kolben vom ersten Druckraum abgegrenzt ist, ausleitet und beispielsweise der Saugseite der Arbeitsmediumpumpe zuführt. Dadurch kann ein doppeltwirkender Arbeitszylinder zum Ein- und Ausfahren des Kolbens geschaffen werden.

EP 0 055 351 A1 beschreibt einen entsprechenden elektrohydraulischen Stellantrieb, mit einem an einem externen Arbeitsmediumkreislauf angeschlossenen zweiseitig wirkenden Arbeitszylinder, wobei im externen Arbeitsmediumkreislauf eine Arbeitsmediumpumpe Arbeitsmedium aus einem Arbeitsmediumvorrat über ein Rückschlagventil entweder in einen ersten Druckraum oder einen zweiten Druckraum des Arbeitszylinders fördert, um dessen Kolbenstange gleichwirkend mit der Kraft einer Druckfeder auszufahren oder entgegen der Kraft der Druckfeder einzufahren. Über die Stellung des Kolbens beziehungsweise der Kolbenstange wird der Öffnungsgrad eines Turbinenregelventils bestimmt. Zur Grobpositionierung des Kolbens im Arbeitszylinder ist ein binärer Durchflussschalter als Vier-Wege-Schaltschieber mit drei Schaltstellungen vorgesehen, dessen beide Steuerleitungen mit den Druckräumen auf beiden Seiten des Kolbens im Arbeitszylinder verbunden sind und der ferner über eine Druckleitung mit der Druckseite der Pumpe und eine Tankleitung mit dem Arbeitsmediumvorrat verbunden ist. Zur Feinpositionierung des Kolbens ist ein elektrohydraulischer Umformer in Form eines vorgesteuerten Servoventils vorgesehen.

Nachteilig an dem Stellantrieb gemäß der EP 0 055 351 A1 ist, dass durch die Drosselverluste an den Steuerkanten der drosselnden Wegeventile, die als Stetigventile ausgebildet sind, der Wirkungsgrad begrenzt ist. Ferner werden hohe Anforderungen an einen konstanten Versorgungsdruck gestellt, um die Position des Kolbens im Arbeitszylinder exakt regeln zu können.

DE 40 30 107 A1 beschreibt einen entsprechenden Stellantrieb, bei welchem Drosselverluste durch Stetigventile weitgehend vermieden werden. Gemäß diesem Stellantrieb, der ebenfalls einen Arbeitszylinder mit zwei Druckräumen aufweist, die an einem externen Arbeitsmediumkreislauf mit einer Arbeitsmediumpumpe angeschlossen sind, wird mit der Arbeitsmediumpumpe, die als Konstantpumpe ausgeführt ist und über einen drehzahlgeregelten Motor angetrieben wird, Arbeitsmedium über ein in Förderrichtung offenes Rückschlagventil in einen ersten Druckraum des Arbeitszylinders gepumpt, sodass der Kolben mit der Kolbenstange entgegen der Kraft einer Druckfeder einfährt. Nachteilig ist, dass das Ausfahren der Kolbenstange allein durch die Kraft der Druckfeder bewirkt wird, wodurch das dynamische Stellverhalten asymmetrisch und in Richtung der Federkraft durch nur die hydraulischmechanische Auslegung des Strömungswiderstandes festgelegt ist und durch elektrische Steuersignale nicht beeinflusst werden kann. Darüber hinaus muss die Arbeitsmediumpumpe in der Lage sein, über alle Drehzahlbereiche hinweg gegen den im Druckraum des Arbeitszylinders herrschenden Druck anfahren zu können.

Auch bei dem Stellantrieb gemäß EP 2 620 655 A1 werden Drosselverluste in Stetigventilen weitgehend vermieden und zudem ist eine von einem Servomotor angetriebene Arbeitsmediumpumpe im externen Arbeitsmediumkreislauf vorgesehen, die drehzahlvariabel ist und Arbeitsmedium aus einem ersten Druckraum des Arbeitszylinders in einen zweiten Druckraum des Arbeitszylinders und umgekehrt pumpen kann, um dadurch rasch die gewünschte Position des Kolbens und damit der Kolbenstange einzustellen. Hierbei ergibt sich jedoch ebenfalls der Nachteil, dass die Arbeitsmediumpumpe in der Lage sein muss, über alle Drehzahlbereiche hinweg gegen den Arbeitsmediumdruck in den beiden Druckräumen des Arbeitszylinders zu arbeiten und für eine dynamische und präzise Steuerung ein vergleichsweise teurer Synchron-Servomotor notwendig ist. Darüber hinaus muss die Arbeitsmediumpumpe in der Lage sein, im stationären Zustand des Kolbens einen Haltedruck gegen die Feder, mit welcher der Kolben druckbeaufschlagt ist, aufzubringen. Das für den Haltedruck erforderliche Drehmoment bei kleiner Drehzahl ist für den Motor der Arbeitsmediumpumpe ein thermisch ungünstiger Betriebsfall. Auch die Arbeitsmediumpumpe neigt bei hohen Drücken und geringem Volumenstrom, welcher zur Feinpositionierung des Kolbens erforderlich ist, zum Überhitzen.

EP 0 127 027 B1 offenbart einen Stellantrieb für ein Regelventil mit einem Arbeitszylinder, der einen Aktuator für das Regelventil ausbildet, bei dem die beiden Druckräume des Arbeitszylinders über eine Verbindungsleitung mit darin angeordneter Drossel verbunden sind.

Der vorliegenden Erfindung liegt die Aufgabe zugrunde, einen Stellantrieb für ein Regelventil, insbesondere Dampfturbinenregelventil der eingangs beschriebenen Art, sowie ein Verfahren zum Betreiben eines solchen Stellantriebs anzugeben, mit welchen Drosselverluste im externen Arbeitsmediumkreislauf vorteilhaft vermieden werden, wobei der Stellantrieb geringe Herstellungskosten aufweist und vorteilhaft unter Vermeidung thermisch ungünstiger Betriebszustände der Arbeitsmediumpumpe und eines diese antreibenden Motors arbeitet.

Die erfindungsgemäße Aufgabe wird durch einen Stellantrieb und ein Verfahren zum Betreiben desselben gemäß den unabhängigen Ansprüchen gelöst. In den abhängigen Ansprüchen sind vorteilhafte und besonders zweckmäßige Ausgestaltungen der Erfindung angegeben.

Ein erfindungsgemäßer Stellantrieb für ein Regelventil, insbesondere Dampfturbinenregelventil, weist einen Arbeitszylinder auf. Der Arbeitszylinder umfasst einen Kolben mit einer daran angeschlossen Kolbenstange, die einen Aktuator für das Regelventil ausbildet. Die Kolbenstange ist entsprechend aus dem Arbeitszylinder ausfahrbar und in diesen einfahrbar, um dadurch den Öffnungsquerschnitt des Regelventils zu bestimmen, beispielsweise durch unmittelbaren oder mittelbaren Anschluss der Kolbenstange an einen Ventilkörper des Regelventils, sodass der Ventilkörper einen Strömungsquerschnitt des Regelventils in Abhängigkeit der Stellung der Kolbenstange mehr oder minder öffnet.

Der Kolben des Arbeitszylinders begrenzt wenigstens einen ersten Druckraum des Arbeitszylinders und der erste Druckraum weist einen ersten Druckanschluss zum Einleiten eines druckbeaufschlagten Arbeitsmediums in den ersten Druckraum auf, um den Kolben mit der Kolbenstange entgegen einer Kraft einer Feder, insbesondere Druckfeder, welche dem Arbeitszylinder zugeordnet ist, durch Druckbeaufschlagung zu verschieben. Beispielsweise fährt die Kolbenstange mit zunehmender Druckbeaufschlagung im ersten Druckraum zunehmend weiter in den Arbeitszylinder ein und mit nachlassender Druckbeaufschlagung im ersten Druckraum aus dem Arbeitszylinder aus. Vorteilhaft wird zugleich mit einer nachlassenden Druckbeaufschlagung im ersten Druckraum ein zweiter auf der vom ersten Druckraum abgewandten Seite des Kolbens vorgesehener Druckraum zunehmend mit Arbeitsmediumdruck beaufschlagt, wie nachfolgend noch erläutert wird.

Erfindungsgemäß weist der Arbeitszylinder einen zweiten Druckraum mit einem zweiten Druckanschluss auf, wobei aus der Bezeichnung Druckanschluss nicht zwingend abzuleiten ist, dass dort ein Überdruck herrschen muss oder der zweite Druckraum mit Arbeitsmedium druckbeaufschlagt wird. Vielmehr kann über den zweiten Druckanschluss gemäß einer Ausführungsraum auch Arbeitsmedium aus dem zweiten Druckraum abgeleitet werden, wenn der zweite Druckraum durch Verschiebung des Kolbens in seinem Volumen verkleinert wird, ohne das druckbeaufschlagte Einbringen von Arbeitsmedium in den zweiten Druckraum, wenn dieser bei entgegengesetztem Kolbenhub in seinem Volumen vergrößert wird. Eine alternative Ausführungsform sieht jedoch vor, dass wechselseitig in den ersten Druckraum und in den zweiten Druckraum druckbeaufschlagtes Arbeitsmedium eingebracht wird, um den Kolben durch diese Druckbeaufschlagung und nicht allein durch die Kraft der Feder im Arbeitszylinder in die erste und in die zweite Richtung zu verschieben.

Der erfindungsgemäße Stellantrieb weist einen externen Arbeitsmediumkreislauf auf, an welchem der Arbeitszylinder mit seinem ersten und seinem zweiten Druckanschluss angeschlossen ist, um Arbeitsmedium in den ersten und zweiten Druckraum ein- und auszuleiten. Im externen Arbeitsmediumkreislauf ist eine über einen Motor angetriebene Arbeitsmediumpumpe vorgesehen, die eine Saugseite und eine Druckseite aufweist und mit der Druckseite über eine Druckleitung an dem ersten Druckanschluss arbeitsmediumleitend angeschlossen ist und mit der Saugseite über eine Tankleitung an dem zweiten Druckanschluss angeschlossen ist.

Erfindungsgemäß ist der erste Druckraum über eine Kurzschlussleitung permanent arbeitsmediumleitend mit dem zweiten Druckraum verbunden.

Durch die erfindungsgemäße Ausgestaltung wird ein kontinuierlicher Arbeitsmediumstrom von der Druckseite zur Saugseite der Arbeitsmediumpumpe ermöglicht, auch wenn der Kolben im Arbeitszylinder stationär gehalten wird. Somit fördert die Arbeitsmediumpumpe stets einen Volumenstrom, vorliegend als Leerlaufvolumenstrom bezeichnet, der so groß gewählt werden kann, dass durch ihn die Verlustwärme der Arbeitsmediumpumpe und insbesondere des die Arbeitsmediumpumpe antreibenden Motors abgeführt werden kann, und der so klein ist, dass der zusätzliche von der Arbeitsmediumpumpe beim Verstellen des Kolbens aufzubringende Arbeitsmediumvolumenstrom den normalen Stellbetrieb nicht beeinträchtigt.

Vorteilhaft ist die Arbeitsmediumpumpe, die beispielsweise durch einen drehzahlveränderlichen Motor, insbesondere Elektromotor (E-Motor) angetrieben wird, direkt, ohne drosselnde Ventile, wie Wegeventile, und insbesondere ohne Rückschlagventile an den ersten Druckraum des Arbeitszylinders beziehungsweise an den ersten Druckanschluss angeschlossen.

Die Arbeitsmediumpumpe ist vorteilhaft derart im externen Arbeitsmediumkreislauf verschaltet, das mit ihr Arbeitsmedium sowohl in den ersten Druckraum hinein als auch aus diesem heraus gefördert werden kann. Gemäß einer ersten Ausführungsform wird dies durch Umkehren der Drehrichtung der Arbeitsmediumpumpe erreicht. Gemäß einer alternativen Ausführungsform kann die Drehrichtung der Arbeitsmediumpumpe beibehalten werden, jedoch wird wechselseitig die Druckseite und die Saugseite der Arbeitsmediumpumpe mit der Druckleitung verbunden, beispielsweise indem von der Druckleitung Saugleitung abzweigt, die in der Tankleitung mündet oder auf der Saugseite der Arbeitsmediumpumpe mündet und ein extern angesteuertes Absperrventil oder Umschaltventil vorgesehen ist, um die Druckleitung mit der Saugseite der Arbeitsmediumpumpe zu verbinden. Gleichzeitig sollte dann die Tankleitung mit der Druckseite der Arbeitsmediumpumpe verbindbar sein, gegebenenfalls ebenfalls durch eine Leitung mit Absperrventil oder die auch an dem Umschaltventil angeschlossen ist.

Wenn die Arbeitsmediumpumpe in zwei Drehrichtungen antreibbar ist und dadurch die Druckseite und die Saugseite der Arbeitsmediumpumpe austauschbar sind, sind entsprechende Leitungsführungen, die auch pumpenintern vorgesehen werden können, nicht erforderlich. Selbstverständlich kommen auch andere Maßnahmen in Betracht, um die gewünschte Richtungsänderung bei der Bewegung des Kolbens zu erreichen.

Sowohl bei einer Ausgestaltung der Erfindung mit in der Drehrichtung reversierbarer Arbeitsmediumpumpe als auch bei einer Ausgestaltung mit wechselndem Anschluss der Druckseite und der Saugseite an die Druckleitung kann vorgesehen sein, die Arbeitsmediumpumpe als Hydromotor und den Motor der Arbeitsmediumpumpe generatorisch antreibbar auszuführen, sodass, wenn Arbeitsmedium aus dem ersten Druckraum in den zweiten Druckraum geleitet wird, die Arbeitsmediumpumpe als Hydromotor angetrieben wird und den Motor generatorisch antreibt. Somit kann die zuvor zur Überwindung der Kraft der Feder des Arbeitszylinders aufgebrachte Energie für den Stellhub teilweise wieder rückgewonnen werden und elektrisch gespeichert werden. Die Umwandlung der Bewegungsenergie in elektrische Energie kann in einem Stromrichter des Motors erfolgen.

In der Kurzschlussleitung, die gemäß einer Ausführungsform der Erfindung parallel zu den Anschlüssen der Druckleitung und der Tankleitung beziehungsweise parallel zum externen Arbeitsmediumkreislauf am Arbeitszylinder angeschlossen ist oder in diesen integriert ist, kann eine Drossel mit konstantem Strömungsquerschnitt vorgesehen sein, die den Volumenstrom des Arbeitsmediums im stationären Zustand des Kolbens von der Druckseite zur Saugseite der Arbeitsmediumpumpe und damit das Fördervolumen der Arbeitsmediumpumpe im Leerlauf bestimmt. Alternativ kann eine Drossel mit variabel einstellbarem Strömungsquerschnitt oder ein Regelventil in der Kurzschlussleitung vorgesehen sein, um den Leerlaufvolumenstrom zu steuern oder zu regeln, beispielsweise derart, dass der Volumenstrom oder Massenstrom des Arbeitsmediums durch die Kurzschlussleitung konstant ist.

Die Kurzschlussleitung kann außerhalb des externen Arbeitsmediumkreislaufes, der mit der ersten und dem zweiten Druckanschluss arbeitsmediumleitend verbunden ist, oder in dem Arbeitsmediumkreislauf, beispielsweise abzweigend von der Druckleitung und einmündend in der Tankleitung vorgesehen sein. Auch ist es möglich die Kurzschlussleitung im Arbeitszylinder zu integrieren, beispielsweise durch Kanäle und/oder Leitungen in einem Gehäuse des Arbeitszylinders.

Vorteilhaft zweigt von der Druckleitung eine Schnellschlussleitung ab, welche in der Tankleitung mündet. In der Schnellschlussleitung kann ein Schnellschlussventil vorgesehen sein, um die Schnellschlussleitung freizugeben oder zu versperren. Durch Freigeben der Schnellschlussleitung kann der Kolben des Arbeitszylinders schnell in eine Fail-Safe-Stellung verbracht werden. Insbesondere wenn das Schnellschlussventil als ungeregeltes Auf-Zu-Ventil ausgeführt ist, ist es vorteilhaft, in der Schnellschlussleitung zusätzlich eine konstante oder einstellbare Drossel in Reihe zu dem Schnellschlussventil vorzusehen, um die Hubgeschwindigkeit des Kolbens beim Öffnen des Schnellschlussventils zu bestimmen beziehungsweise variabel einzustellen.

An der Tankleitung kann ein Arbeitsmediumvorrat angeschlossen sein, aus welchem die Arbeitsmediumpumpe fördert und/oder der dem Ausgleich von Volumenschwankungen im externen Arbeitsmediumkreislauf dient.

Um den maximalen Druck in der Druckleitung zu begrenzen, zweigt von der Druckleitung vorteilhaft eine Überdruckleitung mit einem Überdruckventil ab, die in die Tankleitung mündet.

Gemäß der Erfindung zweigt von der Tankleitung eine Reversierleitung ab, in der ein Rückschlagventil vorgesehen ist. Das Rückschlagventil öffnet insbesondere in Richtung der Druckleitung und schließt in Richtung der Tankleitung. Damit kann Arbeitsmedium bei einem höheren Druck in der Tankleitung als in der Druckleitung an der Arbeitsmediumpumpe vorbei aus der Tankleitung in die Druckleitung und somit aus dem zweiten Druckraum in den ersten Druckraum geleitet werden.

Gemäß dem erfindungsgemäßen Verfahren wird die Arbeitsmediumpumpe des Stellantriebs permanent betrieben und über die Kurzschlussleitung wird Arbeitsmedium von der Druckseite der Arbeitsmediumpumpe zur Saugseite der Arbeitsmediumpumpe befördert, sodass in der Arbeitsmediumpumpe entstehende Wärme mit diesem geförderten Arbeitsmediumvolumenstrom aus der Arbeitsmediumpumpe abgeführt werden kann. Diese Förderung findet auch dann statt, wenn der Kolben im Arbeitszylinder stationär gehalten wird.

Obwohl ein bevorzugter Anwendungsbereich des Stellantriebs der Antrieb eines Dampfturbinenregelventils ist, kann der Stellantrieb auch zum Antrieb anderer Regelventile beispielsweise von Gasturbinen oder auch anderer Aggregate verwendet werden.

Die Erfindung soll nachfolgend anhand eines Ausführungsbeispiels und der Figur exemplarisch beschrieben werden.

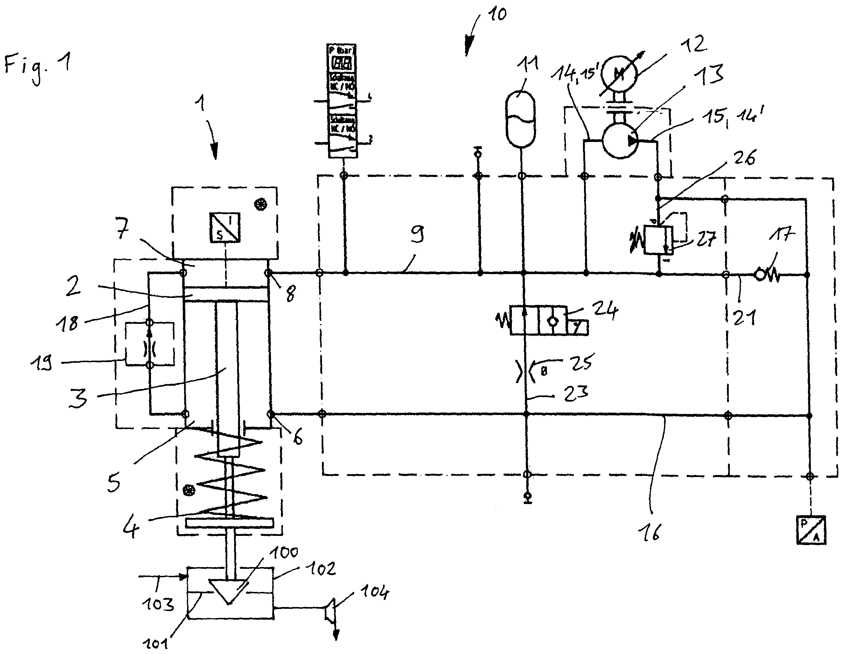

In der Figur 1 ist ein Ausführungsbeispiel für einen erfindungsgemäßen Stellantrieb dargestellt, umfassend einen Arbeitszylinder 1, in welchem ein Kolben 2 einen ersten Druckraum 5 von einem zweiten Druckraum 7 abtrennt und an eine Kolbenstange 3 angeschlossen ist, um diese Kolbenstange 3 wechselseitig in Abhängigkeit der Einleitung von Arbeitsmedium in den ersten Druckraum 5 und/oder zweiten Druckraum 7 in den Arbeitszylinder 1 einzufahren oder aus diesem auszufahren. Der Kolben 2 ist über eine Feder 4 vorgespannt, hier im Sinne eines Ausfahrens der Kolbenstange 3.

Im dargestellten Ausführungsbeispiel dient die Kolbenstange 3 als Aktuator für ein Dampfturbinenregelventil 102, das in der Dampfzufuhr 103 einer Dampfturbine 104 angeordnet ist. Mit der Kolbenstange 3 ist ein Ventilkörper 100 relativ zu einem Ventilsitz 101 verlagerbar, um das Dampfturbinenregelventil 102 mehr oder minder zu öffnen oder zu schließen. Im gezeigten Ausführungsbeispiel bewirkt die Feder 4 beziehungsweise das Ausfahren der Kolbenstange 3 aus dem Arbeitszylinder 1 ein Schließen des Dampfturbinenregelventils 102. Es könnte jedoch auch eine andere Logik gewählt werden oder ein anderes Ventil als ein Dampfturbinenregelventil 102 durch den Stellantrieb betätigt werden.

Der Arbeitszylinder 1 ist an einem externen Arbeitsmediumkreislauf 10 angeschlossen, der eine Druckleitung 16 aufweist, die an einem ersten Druckanschluss 6 des ersten Druckraumes 5 angeschlossen ist, und eine Tankleitung 9 aufweist, die an einem zweiten Druckanschluss 8 des zweiten Druckraumes 7 angeschlossen ist.

Im externen Arbeitsmediumkreislauf 10 ist eine Arbeitsmediumpumpe 13 vorgesehen, die durch einen Motor 12, insbesondere E-Motor, angetrieben wird. Die Arbeitsmediumpumpe 13 weist eine Saugseite 14 und eine Druckseite 15 auf. Auf der Seite der Saugseite 14 ist an der Tankleitung 9 ein Arbeitsmediumvorrat 11 angeschlossen, um Volumenschwankungen im externen Arbeitsmediumkreislauf 10 auszugleichen.

Mit der Arbeitsmediumpumpe 13 kann Arbeitsmedium von der Saugseite 14 auf die Druckseite 15 und über die Druckleitung 16 in den ersten Druckraum 5 gefördert werden, um die Kolbenstange 3 entgegen der Kraft der Feder 4 in den Arbeitszylinder 1 einzufahren. Um die Kolbenstange 3 aus dem Arbeitszylinder 1 auszufahren, kann zum einen die Kraft der Feder 4 genutzt werden und vorteilhaft die Arbeitsmediumpumpe 13 als Hydromotor betrieben werden, sodass Arbeitsmedium durch die Arbeitsmediumpumpe 13 von der Druckseite 15 auf die Saugseite 14 strömt, dadurch die Arbeitsmediumpumpe 13 hydraulisch angetrieben wird und den Motor 12 generatorisch antreibt. Die Antriebsenergie kann dann im Motor 12 oder einem angeschlossenen Wandler umgewandelt und gespeichert werden, insbesondere in Form elektrischer Energie.

Zusätzlich oder alternativ kann auch vorgesehen sein, dass die Arbeitsmediumpumpe 13 durch den Motor 12 in einer zu der zuvor zum Einfahren der Kolbenstange 3 in den Arbeitszylinder 1 beschriebenen Drehrichtung entgegengesetzten Drehrichtung angetrieben wird, und somit aus der Druckseite 15 die Saugseite 14' und aus der Saugseite 14 die Druckseite 15' wird. Dann wird Arbeitsmedium aktiv mittels der Arbeitsmediumpumpe 13 aus dem ersten Druckraum 5 in den zweiten Druckraum 7 gepumpt und zusätzlich eine Kraft auf den Kolben 2 ausgeübt, die der Kraft der Feder 4 gleichgerichtet ist.

Wenn nun der Kolben 2 und damit die Kolbenstange 3 stationär im Arbeitszylinder 1 gehalten wird, müsste die Arbeitsmediumpumpe 13 den Druck zum Ausgleich der Kraft der Feder 4 bei einem sehr kleinen Volumenstrom durch die Arbeitsmediumpumpe 13 aufbringen. Dies würde zu einer Aufheizung der Arbeitsmediumpumpe 13 führen, da der kleine Volumenstrom nicht in der Lage ist, Wärme aus der Arbeitsmediumpumpe 13 abzuführen. Erfindungsgemäß ist daher eine Kurzschlussleitung 18 vorgesehen, welche den ersten Druckraum 5 permanent arbeitsmediumleitend mit dem zweiten Druckraum 7 verbindet. Aufgrund dieser permanenten Arbeitsmediumleitung wird der durch die Arbeitsmediumpumpe 13 geförderte Arbeitsmediumstrom vergrößert, sodass die gewünschte Wärmeabfuhr auch im stationären Zustand des Kolbens 2 erfolgt.

Im gezeigten Ausführungsbeispiel ist in der Kurzschlussleitung 18 ein Kurzschlussventil 19 vorgesehen, beispielsweise in Form einer Drossel mit konstantem oder mit veränderbarem Strömungsquerschnitt oder in Form eines Regelventils. Hierdurch kann der durch die Kurzschlussleitung 18 strömende Arbeitsmediumstrom entweder druckabhängig eingestellt werden oder aktiv verändert werden, beispielweise druckunabhängig konstant gehalten werden.

Im gezeigten Ausführungsbeispiel zweigt von der Tankleitung 9 eine Reversierleitung 21 ab, in der ein Rückschlagventil 17 vorgesehen ist. Das Rückschlagventil 17 öffnet in Richtung der Druckleitung 16 und schließt in Richtung der Tankleitung 9. Somit kann immer dann, wenn in der Tankleitung 9 ein höherer Arbeitsmediumdruck herrscht als in der Druckleitung 16, wobei der notwendige relative Überdruck durch die Federkraft des Rückschlagventils 17 bestimmt wird, Arbeitsmedium aus der Tankleitung 9 in die Druckleitung 16 und damit aus dem zweiten Druckraum 7 in den ersten Druckraum 5 strömen, und zwar unter Umgehung der Arbeitsmediumpumpe 13. Dadurch wird bei einem eventuellen Fehlbetrieb vermieden, dass die Arbeitsmediumpumpe 13 im Reversierbetrieb in einen Unterdruckbereich fällt. Dies wäre dann der Fall, wenn sich der Kolben 2 nicht weiter bewegen kann, die Arbeitsmediumpumpe 13 gleichzeitig jedoch weiter im Reversierbetrieb betrieben würde.

Von der Druckleitung 16 zweigt eine Schnellschlussleitung 23 mit einem Schnellschlussventil 24 ab, um durch Öffnen des Schnellschlussventils 24 ein maximal schnelles Bewegen des Kolbens 2 durch die Kraft der Feder 4 zu bewirken, um eine Fail-Safe-Stellung zu erreichen. Hierbei wird die Hubgeschwindigkeit durch die ebenfalls in der Schnellschlussleitung 23 in Reihe zu dem Schnellschlussventil 24 vorgesehene Drossel 25 bestimmt.

Ferner zweigt von der Druckleitung 16 die Überdruckleitung 26 ab, die ebenfalls in der Tankleitung 9 mündet. In der Überdruckleitung 26 ist ein Überdruckventil 27 vorgesehen, welches oberhalb eines vorgegebenen Druckes öffnet, um unzulässige Druckzustände in der Überdruckleitung 16 zu vermeiden.

## Patentansprüche

1. Stellantrieb für ein Regelventil, insbesondere Dampfturbinenregelventil (102),
mit einem Arbeitszylinder (1), und einer Feder (4), wobei der Arbeitszylinder (1) einen Kolben (2) mit einer daran angeschlossenen Kolbenstange (3) aufweist, die einen Aktuator für das Regelventil ausbildet, wobei der Kolben (2) einen ersten Druckraum (5) mit einem ersten Druckanschluss (6) und einen zweiten Druckraum (7) mit einem zweiten Druckanschluss (8) begrenzt, um den Kolben (2) mit der Kolbenstange (3) entgegen der Kraft der dem Arbeitszylinder (1) zugeordneten Feder (4) durch Druckbeaufschlagung des ersten Druckraumes (5) durch Einleiten eines druckbeaufschlagten Arbeitsmediums über den ersten Druckanschluss (6) zu verschieben;
mit einem externen Arbeitsmediumkreislauf (10), an dem der Arbeitszylinder (1) mit seinem ersten und zweiten Druckanschluss (6, 8) angeschlossen ist, um Arbeitsmedium in den ersten und zweiten Druckraum (5, 7) ein- und auszuleiten; wobei
der externe Arbeitsmediumkreislauf (10) eine über einen Motor (12) angetriebene Arbeitsmediumpumpe (13) aufweist, die eine Saugseite (14) und eine Druckseite (15) aufweist und mit der Druckseite (15) über eine Druckleitung (16) an dem ersten Druckanschluss (6) arbeitsmediumleitend angeschlossen ist; wobei
der erste Druckraum (5) über eine Kurzschlussleitung (18) permanent arbeitsmediumleitend mit dem zweiten Druckraum (7) verbunden ist;
**dadurch gekennzeichnet, dass**
die Arbeitsmediumpumpe (13) mit der Saugseite (14) über eine Tankleitung (9) an dem zweiten Druckanschluss (8) angeschlossen ist und von der Tankleitung (9) eine Reversierleitung (21) abzweigt und in der Druckleitung (16) mündet, wobei in der Reversierleitung (21) ein in Richtung der Tankleitung (9) absperrendes Rückschlagventil (17) vorgesehen ist.

2. Stellantrieb gemäß Anspruch 1, **dadurch gekennzeichnet, dass** in der Kurzschlussleitung (18) eine Drossel mit konstantem Strömungsquerschnitt vorgesehen ist.

3. Stellantrieb gemäß Anspruch 1, **dadurch gekennzeichnet, dass** in der Kurzschlussleitung (18) eine Drossel mit variabel einstellbarem Strömungsquerschnitt oder ein Regelventil vorgesehen ist.

4. Stellantrieb gemäß einem der Ansprüche 1 bis 3, **dadurch gekennzeichnet, dass** von der Druckleitung (16) eine Schnellschlussleitung (23) mit einem Schnellschlussventil (24) abzweigt und in der Tankleitung (9) mündet, wobei das Schnellschlussventil (24) insbesondere als ungeregeltes Auf-Zu-Ventil ausgeführt ist, das ausschließlich zwei Schaltstellungen aufweist, nämlich eine erste Schaltstellung, in welcher es den Strömungsquerschnitt der Schnellschlussleitung (23) absperrt, und eine zweite Schaltstellung, in welcher es den Strömungsquerschnitt der Schnellschlussleitung (23) freigibt.

5. Stellantrieb gemäß einem der Ansprüche 1 bis 4, **dadurch gekennzeichnet, dass** an der Tankleitung (9) ein Arbeitsmediumvorrat (11) zum Ausgleich von Volumenschwankungen angeschlossen ist.

6. Stellantrieb gemäß einem der Ansprüche 1 bis 5, **dadurch gekennzeichnet, dass** von der Druckleitung (16) eine Überdruckleitung (26) mit einem Überdruckventil (27) abzweigt und in der Tankleitung (9) mündet.

7. Stellantrieb gemäß einem der Ansprüche 1 bis 6, **dadurch gekennzeichnet, dass** der Motor (12) als drehzahlvariabler Motor (12), insbesondere als E-Motor ausgeführt ist.

8. Stellantrieb gemäß einem der Ansprüche 1 bis 7, **dadurch gekennzeichnet, dass** die Arbeitsmediumpumpe (13) als Hydromotor und der Motor (12) generatorisch betreibbar ist.

9. Stellantrieb gemäß einem der Ansprüche 1 bis 8, **dadurch gekennzeichnet, dass** die Kurzschlussleitung (18) parallel zur Druckleitung (16) und Tankleitung (9) am Arbeitszylinder (1) angeschlossen ist und/oder in den Arbeitszylinder (1) integriert ist.

10. Verfahren zum Betreiben eines Stellantriebs, der gemäß einem der Ansprüche 1 bis 9 ausgebildet ist, **dadurch gekennzeichnet, dass** die Arbeitsmediumpumpe (13) permanent betrieben wird und über die Kurzschlussleitung (18) Arbeitsmedium von der Druckseite (15) der Arbeitsmediumpumpe (13) zur Saugseite (14) der Arbeitsmediumpumpe (13) gefördert wird.

11. Verfahren gemäß Anspruch 10, **dadurch gekennzeichnet, dass** über die Arbeitsmediumpumpe (13) sowohl Arbeitsmedium in den ersten Druckraum (5) hinein als auch aus diesem herausgefördert wird.

12. Verfahren gemäß einem der Ansprüche 10 oder 11, **dadurch gekennzeichnet, dass** die Arbeitsmediumpumpe (13) beim Herausfördern von Arbeitsmedium aus dem ersten Druckraum (5) als Hydromotor betrieben wird und den Motor (12) generatorisch antreibt.

## Claims

1. Actuating drive for a regulation valve, in particular steam turbine regulation valve (102),
having a working cylinder (1) and a spring (4), wherein the working cylinder (1) has a piston (2) with a piston rod (3) connected thereto, which piston rod forms an actuator for the regulation valve, wherein the piston (2) delimits a first pressure chamber (5) with a first pressure port (6) and a second pressure chamber (7) with a second pressure port (8), for the purposes of displacing the piston (2) with the piston rod (3) counter to the force of the spring (4) assigned to the working cylinder (1) by pressurization of the first pressure chamber (5) by introduction of a pressurized working medium via the first pressure port (6);
having an external working medium circuit (10) to which the working cylinder (1) is connected by means of its first and second pressure ports (6, 8) for the purposes of introducing working medium into, or discharging working medium from, the first and second pressure chambers (5, 7); wherein
the external working medium circuit (10) has a working medium pump (13) driven by means of a motor (12), which working medium pump has a suction side (14) and a pressure side (15) and is, by means of the pressure side (15), connected in working-medium-conducting fashion via a pressure line (16) to the first pressure port (6); wherein
the first pressure chamber (5) is permanently connected in working-medium-conducting fashion via a short-circuit line (18) to the second pressure chamber (7);
**characterized in that**
the working medium pump (13) is, by means of the suction side (14), connected via a tank line (9) to the second pressure port (8), and
a reversing line (21) branches off from the tank line (9) and opens into the pressure line (16), wherein a check valve (17) which shuts off in the direction of the tank line (9) is provided in the reversing line (21).

2. Actuating drive according to Claim 1, **characterized in that** a throttle with a constant flow cross section is provided in the short-circuit line (18).

3. Actuating drive according to Claim 1, **characterized in that** a throttle with a variably adjustable flow cross section, or a regulation valve, is provided in the short-circuit line (18).

4. Actuating drive according to any one of Claims 1 to 3, **characterized in that** a fast-closure line (23) with a fast-closure valve (24) branches off from the pressure line (16) and opens into the tank line (9), wherein the fast-closure valve (24) is designed in particular as an unregulated open/closed valve which has only two switching positions, specifically a first switching position, in which it shuts off the flow cross section of the fast-closure line (23), and a second switching position, in which it opens up the flow cross section of the fast-closure line (23) .

5. Actuating drive according to any one of Claims 1 to 4, **characterized in that** a working medium reservoir (11) for the compensation of volume fluctuations is connected to the tank line (9).

6. Actuating drive according to any one of Claims 1 to 5, **characterized in that** a positive-pressure line (26) with a positive-pressure valve (27) branches off from the pressure line (16) and opens into the tank line (9).

7. Actuating drive according to any one of Claims 1 to 6, **characterized in that** the motor (12) is designed as a variable-rotational-speed motor (12), in particular as an electric motor.

8. Actuating drive according to any one of Claims 1 to 7, **characterized in that** the working medium pump (13) can be operated as a hydraulic motor and the motor (12) can be operated as a generator.

9. Actuating drive according to any one of Claims 1 to 8, **characterized in that** the short-circuit line (18) is connected, in parallel with respect to the pressure line (16) and tank line (9), to the working cylinder (1), and/or is integrated into the working cylinder (1).

10. Method for operating an actuating drive which is designed according to any one of Claims 1 to 9, **characterized in that** the working medium pump (13) is operated permanently and working medium is conveyed from the pressure side (15) of the working medium pump (13) to the suction side (14) of the working medium pump (13) via the short-circuit line (18) .

11. Method according to Claim 10, **characterized in that** working medium is conveyed both into and out of the first pressure chamber (5) by means of the working medium pump (13).

12. Method according to either of Claims 10 and 11, **characterized in that** the working medium pump (13), when conveying working medium out of the first pressure chamber (5), is operated as a hydraulic motor and drives the motor (12) as a generator.

## Revendications

1. Mécanisme de commande pour une soupape de réglage, en particulier une soupape de réglage de turbine à vapeur (102),
comprenant un cylindre de travail (1) et un ressort (4), le cylindre de travail (1) présentant un piston (2) doté d'une tige de piston (3) raccordée à celui-ci et qui réalise un actionneur pour la soupape de réglage, le piston (2) limitant une première chambre de pression (5) dotée d'un premier raccord de pression (6) et une deuxième chambre de pression (7) dotée d'un deuxième raccord de pression (8) afin de déplacer le piston (2) avec la tige de piston (3) contre la force du ressort (4) associé au cylindre de travail (1) par mise sous pression de la première chambre de pression (5) en introduisant un fluide de travail sous pression par l'intermédiaire du premier raccord de pression (6) ;
comprenant un circuit de fluide de travail externe (10) auquel est raccordé le cylindre de travail (1) par son premier et son deuxième raccord de pression (6, 8) afin d'introduire et d'évacuer le fluide de travail de la première et de la deuxième chambre de pression (5, 7) ; dans lequel
le circuit de fluide de travail externe (10) présente une pompe à fluide de travail (13) entraînée par un moteur (12) et qui présente un côté aspiration (14) et un côté pression (15) et est raccordée par le côté pression (15) au premier raccord de pression (6) par l'intermédiaire d'une conduite sous pression (16) de manière à conduire le fluide de travail ; dans lequel
la première chambre de pression (5) est reliée en permanence à la deuxième chambre de pression (7) par l'intermédiaire d'une conduite en court-circuit (18) de manière à conduire le fluide de travail ;
**caractérisé en ce que** la pompe à fluide de travail (13) est raccordée par le côté aspiration (14) au deuxième raccord de pression (8) par l'intermédiaire d'une conduite de réservoir (9), et une conduite réversible (21) bifurque de la conduite de réservoir (9) et débouche sur la conduite sous pression (16), un clapet antiretour (17) fermant en direction de la conduite de réservoir (9) étant prévu dans la conduite réversible (21).

2. Mécanisme de commande selon la revendication 1, **caractérisé en ce qu'**un étrangleur ayant une section transversale d'écoulement constante est prévu dans la conduite de court-circuit (18).

3. Mécanisme de commande selon la revendication 1, **caractérisé en ce qu'**un étrangleur ayant une section transversale d'écoulement à réglage variable ou une soupape de réglage est prévu(e) dans la conduite de court-circuit (18).

4. Mécanisme de commande selon l'une quelconque des revendications 1 à 3, **caractérisé en ce qu'**une conduite à fermeture rapide (23) dotée d'une soupape à fermeture rapide (24) bifurque de la conduite sous pression (16) et débouche sur la conduite de réservoir (9),
la soupape à fermeture rapide (24) étant réalisée en particulier sous la forme d'une soupape tout ou rien non régulée qui ne présente que deux positions de commutation, à savoir une première position de commutation dans laquelle elle ferme la section transversale d'écoulement de la conduite à fermeture rapide (23), et une deuxième position de commutation dans laquelle elle libère la section transversale d'écoulement de la conduite à fermeture rapide (23).

5. Mécanisme de commande selon l'une quelconque des revendications 1 à 4, **caractérisé en ce qu'**une réserve de fluide de travail (11) est raccordée à la conduite de réservoir (9) pour compenser des variations de volume.

6. Mécanisme de commande selon l'une quelconque des revendications 1 à 5, **caractérisé en ce qu'**une conduite de surpression (26) dotée d'une soupape de surpression (27) bifurque de la conduite sous pression (16) et débouche sur la conduite de réservoir (9).

7. Mécanisme de commande selon l'une quelconque des revendications 1 à 6, **caractérisé en ce que** le moteur (12) est réalisé sous la forme d'un moteur (12) à vitesse de rotation variable, en particulier d'un moteur électrique.

8. Mécanisme de commande selon l'une quelconque des revendications 1 à 7, **caractérisé en ce que** la pompe à fluide de travail (13) peut fonctionner en mode moteur hydraulique et le moteur (12) peut fonctionner en mode générateur.

9. Mécanisme de commande selon l'une quelconque des revendications 1 à 8, **caractérisé en ce que** la conduite de court-circuit (18) est raccordée en parallèle à la conduite sous pression (16), et la conduite de réservoir (9) est raccordée au cylindre de travail (1) et/ou est intégrée dans le cylindre de travail (1).

10. Procédé d'exploitation d'un mécanisme de commandes qui est réalisé selon l'une quelconque des revendications 1 à 9, **caractérisé en ce que** la pompe à fluide de travail (13) fonctionne en permanence, et la conduite de court-circuit (18) débite le fluide de travail du côté pression (15) de la pompe à fluide de travail (13) au côté aspiration (14) de la pompe à fluide de travail (13).

11. Procédé selon la revendication 10, **caractérisé en ce que** la pompe à fluide de travail (13) fait à la fois entrer et sortir le fluide de travail dans la première chambre de pression (5).

12. Procédé selon l'une quelconque des revendications 10 ou 11, **caractérisé en ce que** la pompe à fluide de travail (13) fonctionne en mode moteur hydraulique lorsqu'elle fait sortir le fluide de travail de la première chambre de pression (5) et entraîne le moteur (12) en mode générateur.
